Europäisches Patentamt

European Patent Office

Office européen des brevets

(11) Veröffentlichungsnummer : **0 205 648**
B1

# (12) EUROPÄISCHE PATENTSCHRIFT

(45) Veröffentlichungstag der Patentschrift :
07.09.88

(21) Anmeldenummer : 85108057.2

(22) Anmeldetag : 28.06.85

(51) Int. Cl.⁴ : **B 65 G 69/00**

(54) Aufhängung einer Verladetorabdichtung.

(43) Veröffentlichungstag der Anmeldung :
30.12.86 Patentblatt 86/52

(45) Bekanntmachung des Hinweises auf die Patenterteilung : 07.09.88 Patentblatt 88/36

(84) Benannte Vertragsstaaten :
DE FR GB

(56) Entgegenhaltungen :
EP-A- 0 025 103
FR-A- 1 289 926
US-A- 3 352 314
US-A- 4 003 170

(73) Patentinhaber : HÜBNER Gummi- und Kunststoff GmbH
Agathofstrasse 15
D-3500 Kassel-Bettenhausen 1 (DE)

(72) Erfinder : Koch, Robert
Schlesierstrasse 2
D-3437 Bad Sooden-Allendorf (DE)

(74) Vertreter : Walter, Helmut
Aubingerstrasse 81
D-8000 München 60 (DE)

## Beschreibung

Die vorliegende Erfindung bezieht sich auf eine sogenannte Verladetorabdichtung, wie sie Gegenstand der dem Oberbegriff des Anspruchs 1 entsprechenden Europäischen Anmeldung 00 25 103 der gleichen Anmelderin ist. Der vorliegenden Erfindung liegt die Aufgabe zugrunde, die ältere Lösung auch im Hinblick auf extreme Einsatzbedingungen mit vertretbarem baulichem Aufwand zu verbessern.

Der Vorteil der älteren Lösung besteht darin, daß der Zwischenraum zwischen der Umgrenzung eines Tores in einer Lagerhalle und einem rückwärts davor stehenden Lastkraftwagen auch dann gegen Wetterunbilden geschützt überbrückt werden kann, wenn der Abstand zwischen Verladetor und Lastkraftwagenrückwand ungewöhnlich groß ist und der Lastkraftwagen mit relativ großer seitlicher Versetzung an das Verladetor herangerangiert worden ist, der seitliche Versatz zwischen Verladetor und Rückwandtür des Lastkraftwagen also relativ groß ist. Von besonderer Bedeutung ist, daß dieser Vorteil erzielt werden kann, ohne daß der Faltenbalg als wesentliches Teil der Verladetorabdichtung an seinem vorderen Ende auf der Verladerampe abgestützt werden müßte. Die Verladetorabdichtung ist vielmehr nur am hinteren Ende abgestützt und im übrigen frei von Bodenberührung, so daß die Verladetorabdichtung unabhängig von der Beschaffenheit der Verladerampe funktionsfähig ist. Die Praxis hat diese Vorteile der bekannten Lösung als entscheidend erwiesen.

Insbesondere soll die vorliegende Erfindung der gleichen Anmelderin die ältere Lösung nun insofern verbessern, als mit vertretbarem technischen Aufwand auch bei extremen Einsatzbedingungen eine einfache Betätigung gewährleistet werden kann.

Die vorliegende Erfindung ist dadurch gekennzeichnet, daß das hintere, gelenkige und vertikal verstellbare Ende jeder Scherenführung einen Querbolzen aufweist, um dessen Längsachse verstellbar das hintere Scherenende ist und der in einer Konsole gehalten ist, die Teil eines vertikal verstellbaren Wagens ist, der in einer vertikalen Laufschiene verstellbar ist und sich mit seinem oberen Ende an einer innerhalb der Laufschiene angeordneten Druckfeder abstützt, deren unteres Widerlager zwischen Wagen und unterem Federende angeordnet ist und deren Bewegungen folgt, während ihr oberes Widerlager in verschiedenen Positionen gegenüber der Laufschiene festlegbar ist.

Eine solche Lösung, insbesondere, wenn sie mit den Merkmalen der Unteransprüche 2 bis 4 weiter ausgestaltet ist, gewährleistet auch bei extremem Auszug des Faltenbalges, daß dieser frei über der Verladerampe gehalten ist, also keiner vorderen Abstützung zwischen seinen beiden Enden, insbesondere am vorderen Ende, bedarf, er also auch dann mit Erfolg eingesetzt werden kann, wenn die Verladerampe nur eine schmale, gut ausgebaute Rollbahn aufweist, die zu schmal ist, als daß sie auch noch durch eine Balgabstützung eingeschränkt werden könnte. Außerdem genügt eine einfache horizontal gerichtete Zugkraft am vorderen Ende der Vorrichtung, um diese in jeder gewollten Betriebsstellung zwischen zwei extremen Betriebsstellungen betriebsbereit anhalten zu können.

In den weiteren Ausgestaltungen gemäß den Anwendungsansprüchen 5 bis 7 werden zusätzliche Maßnahmen vorgeschlagen, um den Balg ohen Bodenabstützung vertikal so steif zu machen, daß die durch die erfindungsgemäße Lösung gegebene Auszugsmöglichkeit genutzt werden kann.

Es ist zwar bereits eine Verladetorabdichtung bekannt, bei der ein tunnelförmiges Gebilde am hinteren Ende an der Umgrenzung des Verladetores gehalten ist und das vordere Ende des tunnelförmigen Gebildes auf beiden Seiten in je einer Lenkerführung gehalten ist, in die eine Wickelfeder integriert ist und die in einem ortsunveränderlichen Gelenkpunkt und in einem durch Ausbildung als vertikal verstellbarer Wagen ortsveränderlichem Gelenkpunkt an der Torumgrenzung gelagert ist (US-PS 3 352 314). Das tunnelförmige Gebilde ist dabei aber kein in erheblichem Maße längenveränderlicher Faltenbalg. Seitenwände und Dach des Tunnels werden vielmehr von je einer glatten, biegbaren Materialbahn gebildet und die Länge des Tunnels ist nur in sehr begrenztem Maße veränderlich. Es genügt deshalb, das vordere Tunnelende durch die Kraft der in die Lenkerführungen integrierten, als Zugfedern ausgebildeten Wickelfedern zu halten. Aber trotz dieser relativ einfachen Bedingungen, die die Anwendung verhältnismäßig einfacher Zugfedern zuläßt, hat die bekannte Lösung den Nachteil, daß die Wickelfedern ungeschützt Umgebungseinflüssen ausgesetzt sind und deswegen bei rauhem LKW-Ent- und Beladebetrieb die Gefahr vorzeitiger Zerstörung besteht.

Demgegenüber nimmt die erfindungsgemäße Ausgestaltung auf die Möglichkeit wesentlich größerer Längenänderungen bei Torabdichtungen, die als Faltenbalg ausgebildet sind, Rücksicht, es kann durch Verstellen des einen Federwiderlagers unterschiedlichen Ausgestaltungen der Torabdichtung Rechnung getragen werden und es ist die Feder wie der Wagen selbst, vor Umgebungseinflüssen weitgehend geschützt, innerhalb der Führungsschiene angeordnet, wenn diese bei der Erfindung, wie bei der bekannten Lösung bereits vorgesehen, ein weitgehend geschlossenes Kastenprofil ist. Bei der erfindung liegt, mit anderen Worten, im Gegensatz zu der bekannten Lösung, eine weitgehend geschlossene Baugruppe vor, indem die Feder dem Wagen unmittelbar zugeordnet und als Druckfeder ausgebildet und entsprechend angeordnet ist.

Die Erfindung wird nachfolgend anhand der Zeichnung näher beschrieben. In der Zeichnung zeigen

Fig. 1 eine erfindungsgemäß ausgestaltete Torabdichtung in perspektivischer Darstellung,

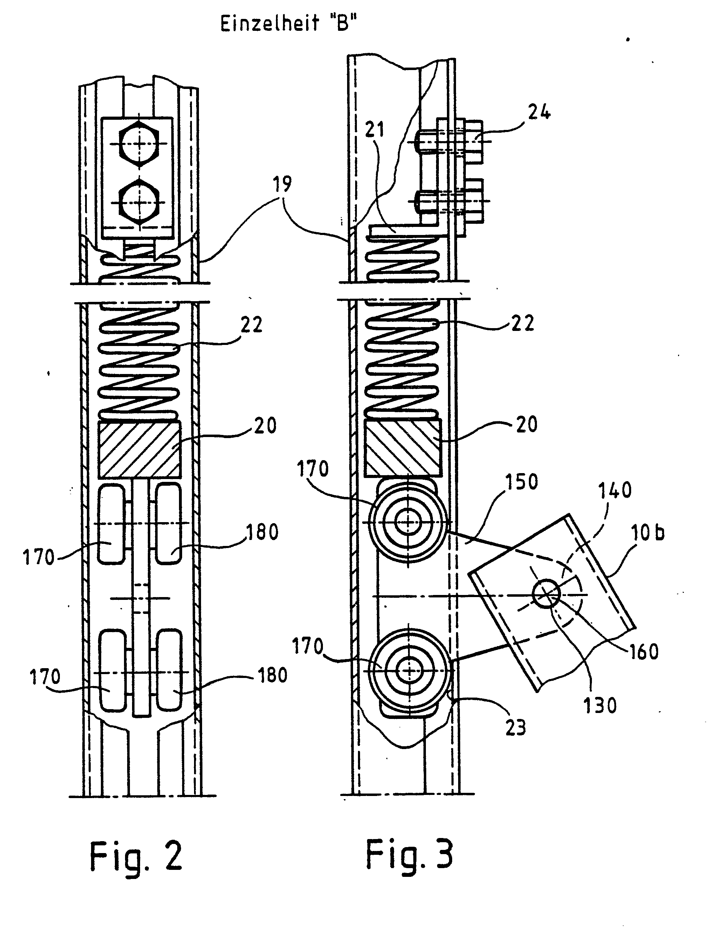

Fig. 2, 3 den durch den Linienzug B in Fig. 1 umgrenzten Bereich der Vorrichtung in größerer Darstellung und in der Form zweier senkrecht zueinander stehender vertikaler Schnitte und

Fig. 4 den durch den Linienzug A in Fig. 1 umgrenzten Bereich der Vorrichtung in größerer Darstellung und in der Form eines Horizontalschnittes.

Ein Faltenbalg 1 mit zwei Seitenwänden und einer Oberseite ist mit seinem hinteren Ende, eine Wandöffnung 2 als sogenanntes Verladetor umschließend, an dem die Wandöffnung 2 umgrenzenden Mauerwerk 3 eines Lagerschuppens oder dergleichen angeschlossen. Dem Anschluß dient ein hinterer Anschlußrahmen 4, der in das Material des Faltenbalges 1 eingearbeitet ist oder auf den Faltenbalg aufgesetzt ist. Der Befestigung des Anschlußrahmens 4 am dem Mauerwerk 3 dienen Schrauben 5, die durch Löcher des Anschlußrahmens 4 hindurchgesteckt und in Gewindelöcher des Mauerwerkes eingeschraubt sind und nach dem Einschrauben mit ihren Köpfen an der Außenseite des Anschlußrahmens, diesen an das Mauerwerk anlegend, anliegen. Vor dem Anschrauben des Anschlußrahmens 4 am Mauerwerk 3 ist ein Dichtband 6 auf dem Mauerwerk aufgeklebt, das etwaige Unebenheiten des Mauerwerkes ausgleicht und Spalten zwischen Mauerwerk und Anschlußrahemn vermeidet. An seinem vorderen Ende ist der Faltenbalg 1 mit einem dem Anschlußrahmen 4 entsprechenden Endrahmen 7 versehen. Gegenbenenfalls sind auch noch Zwischenrahmen im Bereich der Außenfalten 8 des Faltenbalges diesem zugeordnet.

Im Bereich der unteren Enden des Faltenbalges 1 ist diesem je ein Gelenkband 9 zugeordnet. Jedes Gelenkbandglied besteht aus einem vertikalen Streifen 9a aus Metall oder dergleichen, der an jedem Ende ein Scharnier 9b mit vertikaler Schwenkachse aufweist. Das Scharnier liegt kurz vor einer Falte zwischen zwei aufeinanderfolgenden Balgbahnen. Bis zu der Falte schließt sich an das Scharnier 9b ein entsprechend kurzer vertikaler Streifen 9c an. Die beiden kurzen Streifen 9c zu beiden Seiten einer Falte sind unter Zwischenlage der an die Falte anschließenden Bereiche der zur Falte zusammengeführten Balgbahnen miteinander verschraubt oder vernietet. Auf diese Weise behindern die beiden Gelenkbänder 9 nicht das Ausziehen und Zusammenschieben die Faltenbalges, sie bilden jedoch eine in vertikaler Richtung biegesteife Versteifung des Balges an seinen beiden unteren Enden, von denen aus dieser einen Tunnel zwischen dem Lagerschuppen und beispielsweise dem hinteren Ende eines zu be- oder entladenden Fahrzeuges bildet. Gleichzeitig schützen sie den Balg an den besonders gefährdeten unteren Balgenden.

Der « Aufhängung » des Balges dient an jeder Seite ein Scherenführung 10. Am hinteren Ende sind die beiden Stangen 10a, 10b jeder Scherenführung in Kosolen 11, 12 gelenkig am Mauerwerk 3 seitlich vom Anschlußrahmen 4 angeschlossen. Die vorderen Enden der Stangen 10a, 10b sind in entsprechender Weise in Konsolen 13, 14 am vorderen Endrahmen 7 angelenkt. In der Mitte sind die Stangen 10a, 10b jeder Scherenführung 10 durch einen Zapfen 15 gelenkig miteinander verbunden.

Am vorderen Endrahmen 7 sind elastische Schürzen 16 befestigt, die den freien Tunnelquerschnitt des Balges variabel verkleinern, um eine Abdichtung bei verschiedenen Querschnitten des zu be- bzw. entladenden Behälters oder dergleichen zu gewährleisten. Bei Nichtgebrauch ist die Toröffnung durch einen Rolladen 17 oder dergleichen verschließbar.

Die Führung des Balges ist so exakt, daß die Längenänderung des Balges mit einem Antrieb bewirkt werden kann, der nur einen einziten Antriebsmotor aufweist, der in Wirkverbindung mit der Mitte des vorderen oberen Endes des Faltenbalges steht.

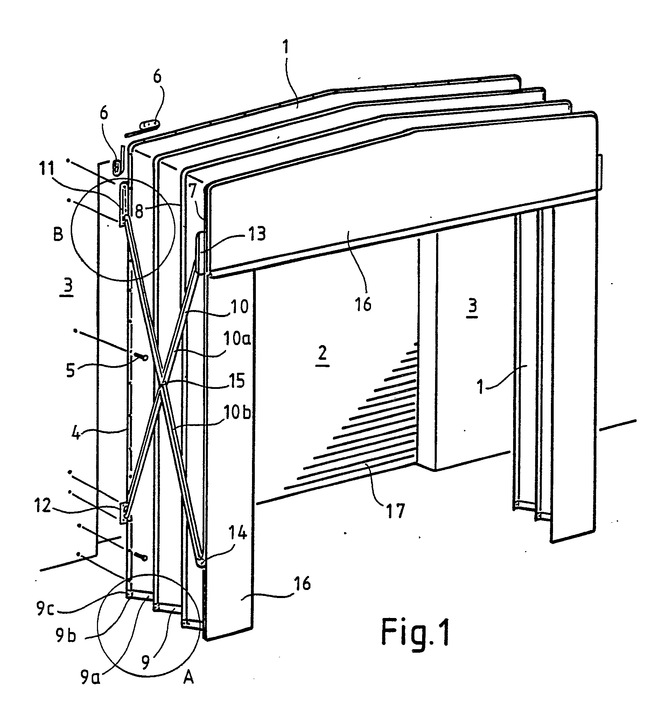

Die Scherenführung im Bereich beider Längswände des Faltenbalges 1 kann aus zwei einander kreuzenden Stangen bestehen (wie dargestellt) oder aus einem Vielfachen dieser Anordnung. Die Teile der Scherenführung im Bereich beider Balgseitenwände gleichen einander, so daß nur die Führung im Bereich der in Fig. 1 von außen sichtbaren Seitenwand des Balges beschrieben werden muß, auf deren Balgaußenseite die Führung angeordnet ist.

Das untere hintere Ende der Scherenführung ist als Auge ausgebildet, durch das und entsprechende Augen eines gabelförmigen Konsols 12 ein Lagerzapfen gesteckt ist, um dessen Längsachse das Auge der Scherenführung gegenüber dem Zapfen drehbar und demzufolge die Stange 10a der Scherenführung 10 schwenkbar ist. Das Konsol 12 ist ortsfest der Umgrenzung des Ladetores 2 zugeordnet, beispielsweise mit einer Lagerplatte angeschraubt.

Das hintere Ende der Stange 10b und damit das obere hintere Ende der Scherenführung ist vertikal verstellbar erfindungsgemäß wie folgt gelagert. Es ist mit einem Lagerauge 130 versehen, durch das und ein entsprechendes Lagerauge 140 eines vertikal verstellbaren Wagens 150 ein Lagerzapfen 160 derart gesteckt ist, daß die Stange 10b um die Längsachse des Zapfens 160 vertikal schwenkbar ist. Zu beiden Seiten des plattenförmigen Wagens 150 ist je ein Rollenpaar gelagert, wobei je zwei Rollen 170 bzw. 180 um eine gemeinsame Querachse drehbar am Wagen 150 gelagert sind. Der Wagen 150 ist in einer vertikalen Laufschiene 19 angeordnet und stützt sich mit seinem oberen Ende an einem unteren Federlager 20 ab, zwischen dem und einem oberen Federlager 21 eine gewickelte Druckfeder 22 angeordnet ist. Das untere Federlager 20 wird durch den Gleichgewichtszustand zwischen der Federkraft und der in der Längsachse der Feder wirksamen vertikalen Gewichtskomponenten des Gewichtes der Verladetorabdichtung fixiert. Wird der Auszug der Verladetorabdichtung verändert, diese also verlängert oder verkürzt, so wird dieser Gleichgewichtszustand gestört und der Wagen 150 so lange nach oben oder unten verstellt, bis ein neuer Gleichgewichtszustand hergestellt ist. Während der Verstellbewegung rollen die Rollen 170, 180 auf einer vorderen inneren Lauffläche 23 der Laufschiene 19 ab, an der sie sich abstützten. Das obere Federlager 21 ist ortsfest, jedoch kann es in unterschiedlichen Positionen an der Laufschiene 19 mittels Schrauben 24 festgelegt werden.

Die Federn 22 der Scherenführung an beiden Außenseiten des Faltenbalges wirken so als Gewichtsausgleich und halten den oberen Anschlußpunkt der Scherenführung in seinem vom Auszug der Verladetorabdichtung abhängigen Abstand vom unteren Anschlußpunkt. Andererseits beeinträchtigen sie nicht unzumutbar die Verstellung der Verladetorabdichtung, d. h. machen keine unzumutbaren Verstellkräfte erforderlich.

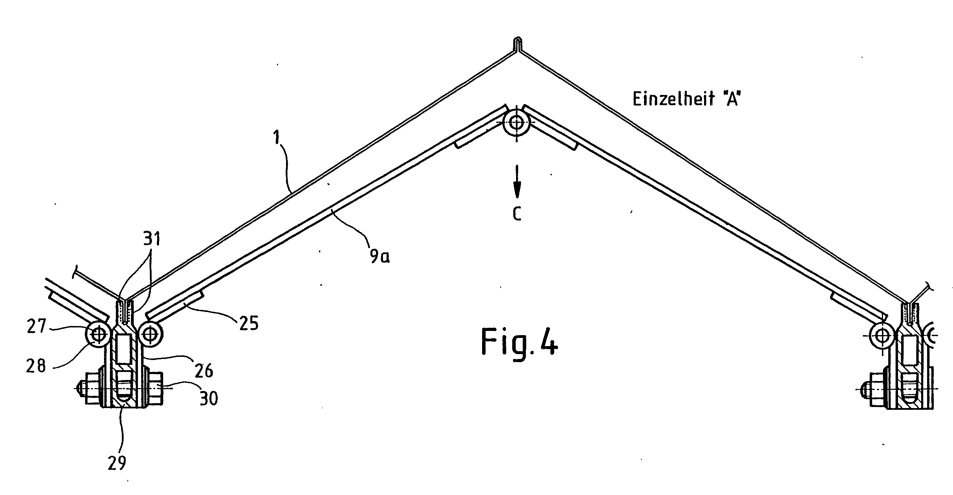

Um die so gegebene Möglichkeit, die Verladetorabdichtung ohne stütztenden Bodenkontakt außergewöhnlich weit ausziehen zu können, auch nutzen zu können, sind Gelenkpunkte des Gelenkbandes 9 auf jeder Faltenbalgseite entsprechend und erfindungsgemäß nach Fig. 4 ausgestaltet. Jeder zweite Gelenkpunkt, d. h. jeder Gelenkpunkt im Bereich einer Außenfalte weist ein Paar Gelenkelemente aus zwei kurzen vertikalen Platten 25, 26 auf. Die eine Platte 25 ist dem vertikalen Streifen 9a zugeordnet und ihr freies Ende ist dem Zapfen 27 oder der Hülse 28 des Zapfengelenkes 27, 28 mit vertikaler Schwenkachse zugeordnet. Dem anderen Teil des Zapfengelenkes, also seiner Hülse 28 bzw. seinem Zapfen 27 ist die zweite kurze Platte 26 zugeordnet. Zwischen den beiden parallelen Platten 26 eines Gelenkpunktes ist eine kastenförmige Schiene 29 gehalten, wenn die beiden Platten 26 mittels Schrauben 30 miteinander verschraubt sind. Diese beiden Platten 26 bilden die kurzen Streifen 9c, das Zapfengelenk 27, 28 bildet das Scharnier 9b in Fig. 1. An das nach innen gerichtete Ende der Schiene 29 ist eine Gabel 31 eingesetzt, deren einander zugekehrten Flächen reibungserhöhend ausgebildet sind und zwischen sich die einander zugehörigen Ränder zweier aufeinanderfolgenden Bahnen des Faltenbalges 1 halten. Auf diese Weise ist sichergestellt, daß sich die Falten nur nach der durch den Pfeil C gekennzeichneten Richtung öffnen können, ein Durchgang durch die gestreckte Lage und ein Öffnen der Falten nach der anderen Seite ist nicht möglich. Für diesen Zweck reicht es aus, nur die Gelenkpunkte im Bereich der äußeren Falten entsprechend auszubilden, die anderen Gelenkpunkte des Gelenkbandes sind einfache Zapfengelenke, die ein Öffnen der Falten nach beiden Seiten zulassen würden.

Die Ausbildung der Gelenkpunkte im Bereich der Außenfalten gemäß der Erfindung erhöht die Steifigkeit des Balges für eine durch die Befestigung an der Verladetorumgrenzung gemäß der Erfindung mögliche übergroße Auszuglänge durch Ausschalten einer nicht notwendigen Beweglichkeit, erhält jedoch die für die Funktion notwendige Beweglichkeit.

**Patentansprüche**

1. Aufhängung einer Verladetorabdichtung mit einem Seitenwände und eine Oberseite aufweisenden Faltenbalg (1), der mit seinem hinteren Ende (4) an der Umgrenzung des Verladetores (2) gehalten ist, mit seinem vorderen Ende (16) an den zu be- und entladenden Behälter heranbringbar ist und an seitlichen vertikal biegesteifen, in Längsrichtung des Balges längenveränderlichen Scherenführungen (10) gehalten ist, die an ihren hinteren einen Enden (12) gelenkig aber ortsfest, an ihren hinteren anderen Enden (11) gelenkig und vertikal verstellbar von der Verladetorumgrenzung gelagert sind, dadurch gekennzeichnet, daß das hintere, gelenkige und vertikal verstellbare Ende (11) jeder Scherenführung (10) einen Querbolzen (16) aufweist, um dessen Längsachse verstellbar das hintere Scherenende ist und der an einem vertikal verstellbaren Wagen (15) gehalten ist, der in einer vertikalen Laufschiene (19) verstellbar ist und sich mit seinem oberen Ende an einer innerhalb der Laufschiene angeordneten Druckfeder (22) abstützt, deren unteres Widerlager (20) zwischen Wagen und unterem Federende angeordnet ist und deren Bewegungen folgt, während ihr oberes Widerlager (21) in verschiedenen Positionen gegenüber der Laufschiene festlegbar ist.

2. Aufhängung nach Anspruch 1, dadurch gekennzeichnet, daß das Konsol (15) jedes Wagens (15a) durch einen Längsschlitz in der dem Wagen zugeordneten Laufschiene (19) hindurchgeführt ist, zu dessen beiden Seiten sich der Wagen unter dem Einfluß des Gewichtes der Torabdichtung mit je einem Rollenpaar (17, 17 ; 18, 18) an der Laufschiene abstützt.

3. Aufhängung nach Anspruch 1 oder 2, dadurch gekennzeichnet, daß die Druckfeder (22) eine Wickelfeder ist.

4. Aufhängung nach einem der Ansprüche 1 bis 3, dadurch gekennzeichnet, daß die Scherenführung an jeder Seite des Faltenbalges (1) außerhalb desselben angeordnet ist.

5. Anwendung einer Aufhängung gemäß einem oder mehrerer der Ansprüche 1 bis 4 bei einer Verladetorabdichtung, deren Faltenbalg (1) dadurch gekennzeichnet ist, daß einzelne vertikale Balgbahnen in Scharnieren miteinander verbunden sind, die ein Öffnen der Balgbahnen (Vergrößerung des Winkels zwischen den Balgbahnen) nur in einer Richtung (0) zulassen, wobei die Scharniere Teile eines Gelenkbandes im Bereich des unteren Endes jeder Balgseitenwand sind.

6. Anwendung der Aufhängung gemäß dem Anspruch 5, bei der der Faltenbalg dadurch gekennzeichnet ist, daß zwei vertikale Streifen des jeweiligen Gelenkbandes mit einer Länge, die etwa der Breite einer Balgbahn entspricht, in je einem Doppelgelenk mit vertikalen Schwenkachsen miteinander verbunden sind, wobei auf der einen Seite jedes Gelenkes je einer der vorerwähnten Streifen und auf jeder anderen Seite ein relativ kurzer Streifen angeordnet ist, wobei die kurzen Streifen parallel zueinander verlaufen und miteinander verbunden sind und dabei zwischen sich eine Klemmverbindung halten, die zwei Balgbahnen an ihren einander zugeordneten Kanten miteinander verbinden.

7. Anwendung der Aufhängung gemäß dem Anspruch 6, bei der der Faltenbalg dadurch gekennzeichnet ist, daß die Klemmverbindung ein Strangprofil (29) ist, das im Bereich zwischen den kürzeren Streifen des Gelenkbandes kastenförmig ist, von dem aus zwei zugenförmige, federnde Klemmstreifen (31) mit auf den einander zugekehrten Flächen reibungserhöhenden Mitteln wegstehen, die zwischen sich die einander zugeordneten Kanten zweier miteinander zu verbindender Balgbahnen halten.

**Claims**

1. Suspension of a seal for a loading door, the suspension comprising an accordion structure (1) which has side walls and a top and whose rear end (4) is retained on the surrounding of the loading door (2) and whose front end can be moved towards the receptacle to be loaded and unloaded and which is retained on lateral scissors guides (10) which are resistant to vertical bending and whose length can vary lengthwise of the accordion structure and which are so mounted before the door surround as to be pivotable but not displaceable at one of their rear ends (11) and as to be pivotable and vertically displaceable at their other rear ends (11), characterised in that the rear, pivotable and vertically adjustable end (11) of each scissors guide (10) has a transverse pin (16) around whose longitudinal axis the rear scissors end is adjustable and which is secured to a vertically adjustable trolley (15), the same being adjustable in a vertical running rail (19) and bearing by way of its top end on a compression spring (22) disposed in such rail, the botom abutment (20) of the compression spring being disposed between the trolley and the bottom end of the spring and following the movements thereof while the top abutment (21) of the spring is locatable in various positions relatively to the rail (19).

2. A suspension according to claim 1, characterised in that the bracket (15) of each trolley (15a) extends through a longitudinal slot in the rail (19) associated with the trolley and on either side of the slot the trolley bears on the rail (19) under the weight of the door seal in each case by way of a roller pair (17, 17 ; 18, 18).

3. A suspension according to claim 1 or 2, characterised in that the compression spring (22) is a coil spring.

4. A suspension according to any of claims 1-3, characterised in that the scissors guide is disposed on each side of and outside the accordion structure.

5. Use of a suspension according to one or more of claims 1 to 4 for a loading door seal whose accordion structure (1) is characterised in that discrete vertical accordion ways are interconnected in hinges permitting opening of such ways (increase of the angle between the ways) only in one direction (0), the hinges being parts of a hinge band near the bottom end of each side wall of the accordion structure.

6. Use of the suspension according to claim 5 in which the accordion structure is characterised in that two vertical strips of a hinge band are connected, over a length corresponding substantially to the width of one accordion way, in one double hinge each having vertical pivot axes, one of said strips being disposed on one side of each hinge and a relatively short strip being disposed on the other side of each hinge, the short strips extending parallel to one another and being interconnected and retaining between them a clamping connection interconnecting two accordion ways by way of their associated edges.

7. Use of the suspension according to claim 6 in which the accordion structure is characterised in that the clamping connection is an extruded section member (29) which is box-like in the region between the relatively short strips of the hinge plate, and two tongue-like resilient clamping strips (31) extend from the member (29) and have on their facing surfaces friction-increasing means which retain between them the associated edges of two accordion ways to be interconnected.

**Revendications**

1. Suspension d'un raccordement à un portail de chargement qui comporte un soufflet (1) présentant des parois latérales et une face supérieure, qui est maintenu par son extrémité arrière (4) contre le cadre de délimitation du portail de chargement, dont l'extrémité avant peut être amenée au niveau des conteneurs à charger et à décharger et qui est maintenu contre des guidages latéraux en forme de ciseaux (10), rigides en direction longitudinale du soufflet, dont les extrémités arrière (11) sont montées articulées mais fixes (d'une part), et dont les autres extrémités arrière (11) sont articulées et mobiles verticalement par rapport au cadre de délimitation du portail de chargement, caractérisé en ce que l'extrémité arrière (11) articulée et mobile verticalement de chacun des guidages en ciseaux (10) présente un pivot (16) autour de l'axe longitudinal duquel l'extrémité arrière du ciseau peut se déplacer et est maintenue contre un chariot (15) mobile verticalement, qui peut lui-même se déplacer sur un rail vertical (19) et s'appuie par son extrémité supérieure sur un ressort de pression (22) posé à l'intérieur du rail, dont la butée inférieure (20) est disposée entre le chariot et l'extrémité inférieure du ressort et en épouse les déplacements, tandis que sa butée supérieure (21) peut être fixée dans différentes positions par rapport au rail.

2. Suspension selon la revendication 1, caractérisée en ce que la console (15) de chaque chariot (15a) est guidée sur le rail (19) adjoint au chariot sur les deux côtés de laquelle le chariot s'appuie sur le rail par une paire de galets de chaque côté (17, 17 ; 18, 18) sous l'effet du poids de raccordement au portail.

3. Suspension selon une des revendications 1 ou 2 caractérisée en ce que le ressort de pression (22) est un ressort enroulé.

4. Suspension selon une quelconque des revendications 1 à 3, caractérisée en ce que le guidage en ciseaux est disposé de chaque côté du soufflet (1) en dehors de celui-ci.

5. Utilisation d'une suspension selon une ou plusieurs des revendications 1 à 4 pour un raccordement de portail de chargement dont le soufflet (1) est caractérisé en ce que les diverses bandes du soufflet sont reliées entre elles par des charnières qui ne permettent une ouverture des soufflets (augmentation de l'angle entre les bandes du soufflet) que dans une direction (0) ; les charnières constituant des parties d'un bandeau articulé dans la zone d'extrémité inférieure de chaque paroi latérale du soufflet.

6. Utilisation de la suspension selon la revendication 5, avec laquelle le soufflet est caractérisé en ce que deux bandes verticales du bandeau articulé considéré sont reliées entre elles sur une longueur qui correspond approximativement à la largeur d'une bande de soufflet, sur une double jointure chacune, avec des axes de pivotement verticaux, en ce qu'il est respectivement disposé sur un côté de chaque jointure une des bandes précitées et de l'autre côté une bande courte et, en ce que les bandes courtes s'étendent suivant des directions parallèles sont reliées entre elles et maintiennent entre elles une jonction par serrage, qui relie les deux bandes de soufflet aux bords qui leur sont adjoints.

7. Utilisation de la suspension selon la revendication 6, avec laquelle le soufflet est caractérisé en ce que la jonction par serrage est constituée par un rail (29), en forme de caisson dans la zone située entre les bandes plus courtes du bandeau articulé, duquel partent deux bandes de serrage (31) élastiques en forme de languettes, dont les surfaces en regard sont constituées de manière à augmenter le frottement et maintiennent entre elles les bords qui leur correspondent de deux bandes de soufflet à raccorder ensemble.

Fig.1

Einzelheit "B"

Fig. 2

Fig. 3

Einzelheit "A"

Fig.4

0 205 648